(19) Europäisches Patentamt
European Patent Office
Office européen des brevets

(11) EP 3 064 165 A1

(12) **EUROPEAN PATENT APPLICATION**

(43) Date of publication:
07.09.2016 Bulletin 2016/36

(51) Int Cl.:
*A61C 1/06* (2006.01) *A61C 5/02* (2006.01)

(21) Application number: 15157112.2

(22) Date of filing: 02.03.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **VDW GmbH**
**81737 München (DE)**

(72) Inventors:
• **Herrmann, Markus**
**82064 Straßlach (DE)**
• **Vogel, Kolja**
**81541 München (DE)**

(74) Representative: **Hartz, Nikolai**
**Wächtershäuser & Hartz**
**Patentanwaltspartnerschaft mbB**
**Weinstrasse 8**
**80333 München (DE)**

(54) **Cordless endodontic handpiece**

(57) Cordless endodontic handpiece (1) with a rotary and reciprocating operating mode for driving an endodontic instrument in an endodontic treatment, comprising:

(a) an elongated housing (10) having a proximal end (11) and a distal end (12); the housing containing

(a1) a controller (21);

(a2) a rechargeable battery (30) provided distally adjacent to the controller (21);

(a3) a power electronic device (22) provided distally adjacent to the rechargeable battery (30); and

(a4) a motor (40) provided distally adjacent to and contacting the power electronic device (22);

the handpiece further comprising

(b) a reduction gear (50) provided distally adjacent to the motor (40);

wherein

- the reduction gear (50) has a reduction gear ratio of at most 12 :1,

- the motor has a torque constant in the range of from 2 to 10 mNm/A; and

- the motor has a phase to phase resistance in the range of from 0.05 Ω to 3.0 Ω.

Fig. 1

EP 3 064 165 A1

**Description**

**Field of the Invention**

The present invention relates to a cordless endodontic handpiece with a rotary and reciprocating operating mode for driving an endodontic instrument in an endodontic treatment.

A cordless endodontic handpiece of the present invention provides high torque and rotational speed during rotary and reciprocating operating modes while excessive vibrations during reciprocating operating mode are avoided. Moreover, the cordless endodontic handpiece of the present invention may be designed with a light weight and ergonomic compact dimensions.

**Background of the Invention**

Endodontic treatment involves removal of damaged pulp, followed by cleaning and shaping of the root canal, irrigating, and filling of the root canal. Shaping of the canal may be performed by using rotary endodontic files such as drills or reamers adapted to fit an endodontic handpiece.

Conventional endodontic handpieces provide a rotating mechanism by using a required working voltage. The working voltage may be provided to the endodontic handpiece with a power cable for connection to a power supply. A generic endodontic handpiece with a rotary and reciprocating operating mode for driving an endodontic instrument is known from US 6293795 B1. The handpiece is controlled by a desktop control system. An electric motor is fastened to a contra angle to rotate an endodontic file. The motor is connected by a control cable to the control system microprocessor capable of electronically controlling and input/output programming of desired values of motor parameters such as speed, torque, and direction of rotation.

However, the power cable may be accidentally stretched, thereby causing biasing of the handpiece body. Moreover, the power cable may impart a pressure to the handpiece body, thereby interfering with the control of the handpiece body by the dental practitioner.

Cordless endodontic handpieces for driving an endodontic instrument in an endodontic treatment are known. Conventional cordless endodontic handpieces comprise an elongated housing adapted for mounting a contra-angle adapter at the distal end. The housing contains a controller including a power electronic device, a rechargeable battery and a motor.

Conventional cordless endodontic handpieces provide ergonomic advantages when used for driving an endodontic instrument in rotary operating mode. Accordingly, it is possible to attain a rotational speed in the range of from 250 to 850 rpm and a torque in the range of from 5 mNm to 50 mNm during rotary operating mode with a cordless endodontic handpiece having a compact design.

In order to provide a sufficiently high torque with a motor running at a low operating voltage of about 3.7 V, conventional cordless endodontic handpieces employ a reduction gear in the range of from 12:1 and 16:1. Vibrations of the cordless endodontic handpiece are considered not to be relevant in the rotary operating mode.

However, conventional cordless endodontic handpieces are problematic when used for driving an endodontic instrument in reciprocating operating mode due to insufficient torque at the endodontic instrument or excessive vibrations of the handpiece. Excessive vibrations in reciprocating mode are caused by high rotational speeds at the motor axis due to the high reduction rate. Each time the endodontic instrument changes direction, the micromotor has to accelerate twice.

Accordingly, conventional endodontic handpieces with a reciprocating operating mode for driving an endodontic instrument are typically desktop devices employing a reduction gear of 6:1 and a motor running at higher operating voltage of, for example, about 7.2 V. Examples of such devices are VDW.SILVER RECIPROC, VDW.GOLD RECIPROC, Dentsply X-Smart Plus, which have an elongated housing wherein a motor is provided which drives the reduction gear. The motor is connected to the desktop device with cables. The desktop device contains the controller including a power electronic device and rechargeable batteries. The desktop device is connected to the mains power supply.

However, in a conventional cordless endodontic handpiece it is not possible to simply employ a reduction gear of 6:1 without sacrificing either torque or rotational speed. On the other hand, in case the torque constant of the motor is increased, the weight and dimensions of the cordless endodontic handpiece are significantly increased since the operating voltage of the motor must also be increased so that additional batteries are required.

Accordingly, it has not been possible to provide the cordless endodontic handpiece with dimensions of an overall length excluding the contra-angle of at most 180 mm and a maximum diameter of at most 25 mm, which cordless endodontic handpiece has a total weight of at most 180 g.

Given that a desktop endodontic handpiece has a total weight including the weight of half of the cable of 150 to 180 g, the ergonomic advantage of a cordless handpiece disappears when the total weight of the cordless exceeds this range.

**Summary of the Invention**

It is the problem of the present invention to provide a cordless endodontic handpiece with a rotary and reciprocating operating mode for driving an endodontic instrument, which cordless endodontic handpiece may be designed with a light weight and ergonomic compact dimensions and provides sufficiently high torque and rotational speed during rotary and reciprocating operating mode while excessive vibrations during reciprocating operating mode are avoided.

This problem is solved according to the present invention by a cordless endodontic handpiece with a rotary and reciprocating operating mode for driving an endodontic instrument in an endodontic treatment comprising:

(a) an elongated housing having a proximal end and a distal end;
the housing containing

(a1) a controller;
(a2) a rechargeable battery provided distally adjacent to the controller;
(a3) a power electronic device provided distally adjacent to the rechargeable battery; and
(a4) a motor provided distally adjacent to and contacting the power electronic device;
the handpiece further comprising
(b) a reduction gear provided distally adjacent to the motor;
wherein

- the reduction gear has a reduction gear ratio of at most 10 :1,
- the motor has a torque constant in the range of from 2 to 10 mNm/A; and
- the motor has a phase to phase resistance in the range of from 0.05 $\Omega$ to 3.0 $\Omega$.

The present invention is based on the recognition that by decoupling a power electronic device from the controller and providing the power electronic device physically in close proximity to a specific motor and a rechargeable battery opens up the possibility of employing a reduction gear having a reduction gear ratio of at most 10 :1, while at the same time providing high torque and rotational speed during rotary and reciprocating operating mode while excessive vibrations during reciprocating operating mode are avoided. Moreover, according to the design of the present invention an ergonomic cordless endodontic handpiece may be provided with a light weight and compact dimensions.

**Brief Description of the Figures**

Fig. 1 shows a schematic view of a cordless endodontic handpiece according to the present invention.
Fig. 2 shows a side view of an embodiment of a cordless endodontic handpiece according to the present invention.
Fig. 3 shows a top view of the embodiment of a cordless endodontic handpiece according to the present invention.
Fig. 4 shows a bottom view of an embodiment of a cordless endodontic handpiece according to the present invention.
Fig. 5 shows a perspective exploded view of an embodiment of a cordless endodontic handpiece according to the present invention.
Fig. 6 shows a perspective side view of an embodiment of a cordless endodontic handpiece according to the present invention.
Fig. 7 shows a side view of an assembly of the motor and a power electronic device of a cordless endodontic handpiece according to the present invention.
Fig. 8 shows a top view of an assembly of the motor, a power electronic device of an embodiment of a cordless endodontic handpiece according to the present invention.
Fig. 9 shows a top view of a power electronic device for use in a cordless endodontic handpiece according to the present invention.
Fig. 10 shows a perspective side view of a controller of an embodiment of a cordless endodontic handpiece according to the present invention.
Fig. 11 shows a top view of a controller of an embodiment of a cordless endodontic handpiece according to the present invention.
Fig. 12 shows side view of a controller of an embodiment of a cordless endodontic handpiece according to the present invention.
Fig. 13 shows a bottom view of a controller of an embodiment of a cordless endodontic handpiece according to the present invention.

**Detailed Description of the Preferred Embodiments**

The present invention provides a cordless endodontic handpiece with a rotary and reciprocating operating mode for driving an endodontic instrument in an endodontic treatment.
A cordless endodontic handpiece with a rotary operating mode means that a control system is provided for the electric motor driving the endodontic instrument so that the endodontic instrument such as a file rotates continuously through a cutting or planing arc of rotation in a first direction.
A cordless endodontic handpiece with a reciprocating operating mode means that a control system is provided for the electric motor driving the endodontic instrument so that the endodontic instrument such as a file rotates through a cutting or planing first arc of rotation in a first direction, and sequentially the endodontic instrument rotates through a second arc of rotation in a direction opposite to the first direction, wherein the first arc of rotation exceeds that of the second arc of rotation such that material debrided from canal surfaces is ejected from the cleaned surfaces as the endodontic instrument is advanced in the canal. The first arc of rotation may be about 60-400°and the second arc of rotation may be about 20-360°.
According to the present invention, a cordless endodontic handpiece comprises one or more control systems which a adapted for providing a rotary and reciprocating operating mode. The one or more control systems of the cordless endodontic handpiece according to the present invention may furthermore provide additional functionality such as torque control functionality and/or length measurement functionality.

The control system may be provided by the controller contained in the endodontic handpiece of the present invention. Moreover, the control system may also be partially be provided external from the endodontic handpiece in a separate control unit. The control unit may be a computer such as a personal digital assistant.

The control system comprises memory which may be used to store operational parameters, such as speed, torque, operational sequences, of an endodontic treatment, as well as a library of operational parameters for different files and/or file systems. The control system may further include any one or more of a non-volatile memory, wired or wireless communication channels, an Internet channel, data storage media.

### The housing

The cordless endodontic handpiece comprises an elongated housing having a proximal end and a distal end. The housing may be provided with dimensions of an overall length of at most 250 mm and a maximum diameter of at most 35 mm, preferably an overall length of at most 200 mm and a maximum diameter of at most 30 mm. The housing may be a single component housing or a modular housing comprising two or more components. Preferably, the housing is a modular housing. The modular housing comprises components adapted to be releasably assembled so that the endodontic handpiece of the present invention may be sterilized and serviced. According to a preferred embodiment, the housing comprises an upper shell and a lower shell. Additionally, an end cap may be provided at the proximal end of the housing. Furthermore, a sleeve may be provided for releasably engaging the distal end of housing components such as the upper shell and the lower shell.

The housing may be made of any suitable material such as metal, resin and/or composite material.

The housing defines a chamber for receiving a controller, a rechargeable battery, a power electronic device and a motor.

### The controller

The housing contains a controller. The controller is a highly integrated device that includes a microprocessor, FLASH memory for computer program and parameter storage, RAM memory for program execution, clock, analog to digital converters, and preferably a Bluetooth interface for easy interface to external command and sensor inputs. The controller provides means for setting the regime or method of rotation of the endodontic instrument.

The circuitry of the controller can be provided via different analog and/or digital circuit implementations. For instance, in some cases, field effect transistors can be employed and in other cases junction transistors or diodes may be employed. Some components can be employed as discrete implementations such as a comparator comparing a reference signal to a control signal and in other examples, controllers operating via processor instructions and exchanging data via D/A and A/D converters could be employed to monitor feedback and generate control signals. The circuit of the controller can employ various means of monitoring electrical parameters such as monitoring voltage and/or current. It can also employ a microcontroller or other control circuitry capable of digitizing these parameters, storing digital interpretations of these parameters in its memory, and associating acquired values with events in the circuit operation. This includes performing logical and arithmetical operations with the acquired values, for example. In addition, the term controller can include a logical operation capable of being executed as a method in some examples. In other examples, the controller can be hardware modules, software modules, or a combination thereof that can execute instructions to perform control operations. Such hardware and/or software modules can also be configured to perform the methods described herein.

The controller may also provide input keys.

### The rechargeable battery

The housing further contains a rechargeable battery provided distally adjacent to the controller.

The rechargeable battery may comprise one or more electrochemical cells. Preferably the rechargeable battery comprises a single electrochemical cell. The cell may be selected from nickel cadmium (NiCd) cells, nickel metal hydride (NiMH) cells, lithium ion (Li-ion) cells, and lithium ion polymer (Li-ion polymer) cells.

Preferably, a lithium-ion battery may be used. More preferably, a single lithium-ion battery cell is used whereby the output voltage is about 3.7 V. Alternatively, three Ni-Cd or Ni metal hydride batteries may be used each having an output of 1.2 V and having a gross output voltage of 3.6 V.

A battery recharging circuit may be provided to manage recharging the battery. The battery recharging circuit may switch an externally supplied constant current on and off. The recharging circuit may include a microcontroller or other circuitry configured to sense voltage of the battery. When the recharging circuit detects a peak in voltage that begins to drop, the battery has been fully charged. The charge may then be switched to a trickle charge to maintain the battery in a charged state.

The battery may be recharged conductively through electrodes. Illustratively, a pair of recharging electrodes extend from the recharging circuitry. When the endodontic handpiece is not in use, it may rest in a docking station with the electrodes electrically contacting charging electrodes in the docking station. Alternatively, the battery may be recharged via a charge connector.

Alternatively, the battery may be inductively charged. Optionally, an induction charging coil may be provided and electrically connected to the charging circuit. The battery may be rechargeable by electromagnetic induction. Chargers which use inductive charging remove the need to have open electrical contacts hence allowing the adaptor and device to be sealed and used in wet environments. Electromagnetically coupling the coil to a corresponding coil in a docking station enables recharging the battery by induction.

The power electronic device

The housing further contains a power electronic device provided distally adjacent to and contacting the rechargeable battery. Preferably, the power electronic device comprises semiconductor switches selected from MOSFETs or insulated-gate bipolar transistors (IGBTs). Preferably, the power electronic device does not contain any DC/DC transducer since the working voltage of the motor is maintained at a low level according to the present invention, preferably of at most 5V.

Preferably, the controller and the power electronic device are combined on a flex-rigid circuit board.

Preferably, the power electronic device is connected to the rechargeable battery and the motor by conductors having low electrical resistance. Preferably, the conductors having low electrical resistance are made of Cu or an alloy thereof. Preferably, the conductors having low electrical resistance include one or more Pogo@-pins.

The motor

The housing further contains a motor provided distally adjacent to and contacting the power electronic device.

The motor is preferably a motor which can be easily caused to change speed and/or direction. The motor may be a stepper motor or a continuously rotating motor.

According to the present invention, the motor has a phase to phase resistance in the range of from $0.05\,\Omega$ to $3.0\,\Omega$. Preferably, the phase to phase resistance is in the range of from $0.1\,\Omega$ to $2.0\,\Omega$, more preferably at most $1\,\Omega$. The phase to phase resistance may be measured at 23 °C.

The phase to phase resistance $R_{phase}$ is proportional to the resistivity $\rho$ and the total conductor length $l_{cond}$ and inversely proportional to the conductor area $A_{cond}$ and the number of parallel paths $N_{pp}$:

$$R_{phase} = \rho\, T_{lcond} / A_{cond} N_{pp},$$

where the total conductor length $l_{cond}$ is twice the average conductor length times the number of turns per coil times the number of coils per parallel path. A large phase resistance causes large conductor losses, which reduces the electrical energy efficiency of the motor.

The phase resistance can be adjusted by improving the winding technique in order to be able to increase the cross-sectional area of the conductors and thus the slot fill factor, or by using conductor materials with a high electrical conductivity such as copper.

The motor may be preferably a brushless DC motor having permanent magnets which rotate and a fixed armature, eliminating problems associated with connecting current to a moving armature as with brushed DC motors. The electronic controller replaces the brush/commutator assembly of the brushed DC motor, which continually switches the phase to the windings to keep the motor turning. The controller performs similar timed power distribution by using a solid-state circuit rather than the brush/commutator system.

According to the present invention, the motor has a torque constant in the range of from 2 to 10 mNm/A. More preferably, the motor has a torque constant in the range of from 3 to 8 mNm/A.

The torque constant $K_{\tau}$ is defined as the ratio of torque output to current input:

$$K_{\tau} = \tau / I,$$

wherein $\tau$ is the motor torque output and $I$ is the motor current input. The torque constant or $K_{\tau}$ defines the ability of the motor to transform electrical power to mechanical power.

Preferably, the power supplied to the motor is electronically controlled. Preferably, the power supplied to the motor is electronically controlled by pulse-width modulation.

Preferably, the motor is driven by a voltage of at most 5V. Preferably, the rechargeable battery is a single Li-ion cell.

Preferably, the distance between the rechargeable battery and the motor is in the range of from 2 to 20 mm.

The reduction gear

The handpiece further comprises a reduction gear provided distally adjacent to the motor. The reduction gear may be contained in a contra-angle adapter.

According to the present invention, the reduction gear has a reduction gear ratio of at most 12 :1. Preferably, the reduction gear has a reduction gear ratio of at most 10:1, more preferably at most 8:1.

The invention will now be further explained based on the attached figures.

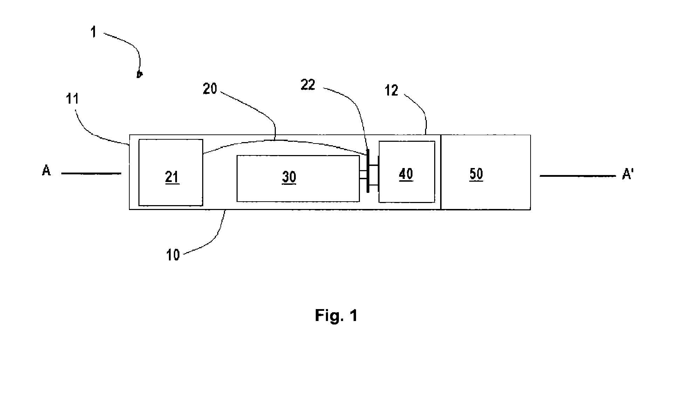

Fig. 1 shows a schematic view of a cordless endodontic handpiece according to the present invention. The cordless endodontic handpiece is adapted for providing a rotary and reciprocating operating mode for driving an endodontic instrument (not shown) in an endodontic treatment. An elongated housing 10 is provided having a proximal end 11 and a distal end 12. Moreover, the housing 10 has a longitudinal axis extending from the proximal end 11 to the distal end 12.

The housing 10 is adapted to receive a controller 21. The controller 21 is mounted proximate to the proximal end. The controller 21 may be releasably attached to the inside of the housing 10. The controller may comprise one or more actuator switches and/or one of more control LEDs. Preferably, the controller is form-fittingly attached to the inside of the housing so that any actuator switch and/or control LED is positioned inside the housing 10 for outside access and visibility by means of suitable recesses or windows provided in the housing.

The controller preferably comprises a circuit for control of a brushless DC motor. Accordingly, a processor analyzes pulse width modulated (PWM) signal feedback received from the brushless DC motor to determine a transition between a mutual inductance zero crossing condition and a Back Electro Motive Force (BEMF) zero crossing condition of the DC motor. The PWM signal feedback is generated by a monitor circuit that monitors three phase winding connections (labeled A, B, and C) with respect to a center tap (CT) connection of the DC motor. In general, two of the windings of the motor are driven by a drive circuit (pulsed high or low via PWM drive signal) and a third winding is left floating which is then monitored by the monitor circuit with respect to the CT connection to generate feedback. Thus, during any given third of revolution of the motor, two of the windings are driven while a different winding (A, B, or C) may be floating and employed to detect position and/or speed of the DC motor. After a certain number of degrees of motor revolution, the polarity of voltage is reversed to a given pair of windings to provide commutation of the motor and to continue angular motion in a given direction. The motor position can be detected by monitoring zero crossing conditions of the floating winding via the monitor circuit. A transition detector (e.g., counter) may be employed in the processor to detect when BEMF conditions have overcome the mutual inductance conditions of the motor.

The housing 10 is further adapted to receive a rechargeable battery 30. The rechargeable battery 30 is provided distally adjacent to the controller 21. Accordingly, the weight of the rechargeable battery 30 may be positioned closer to the center of gravity of the handpiece whereby the ergonomics of the handpiece 1 may be improved. Preferably, the rechargeable battery is positioned so that recharging of the cordless endodontic handpiece may be performed without disassembling of the handpiece.

The housing 10 is further adapted to receive a power electronic device 22 provided in close proximity distally adjacent to the rechargeable battery 30. Specifically, the power electronic device 22 is provided between the rechargeable battery 30 and a motor 40. According to the invention, the longitudinal axis of the housing is normal to the plane of the power electronic device 22 so as to minimize the distance between the motor 40 and the power electronic device 22.

The power electronic device 22 is connected with the controller 21 by a flat ribbon cable. Accordingly, the controller 21 and the power electronic device 22 are combined on a flex-rigid circuit board 20. The power supplied to the motor 40 may be electronically controlled by controller 21. Preferably, the power supplied to the motor 40 is electronically controlled by pulse-width modulation.

Moreover, the power electronic device 22 is connected to the rechargeable battery 30 and the motor 40 by conductors having low electrical resistance. Low electrical resistance may be provided by highly conductive materials of the conductors such as copper or an alloy thereof. Moreover, low electrical resistance may be provided by a short length of the conductors. Finally, low electrical resistance may be provided by a large diameter of the conductors. Preferably, the connection between the power electronic device 22 and the rechargeable battery 30 is provided by Pogo® -pins. A Pogo® pin used to establish a temporary connection between the power electronic device 22 and the rechargeable battery 30. The Pogo® pin usually takes the form of a slender cylinder containing a sharp, spring-loaded pin. Pressed between electronic circuits of the power electronic device and the rechargeable battery, a temporary connection is established which allows quick and easy exchange of the rechargeable battery during service of the handpiece.

On the other hand a permanent connection between the power electronic device 22 and the motor may be acceptable so that a drive unit comprising the motor 40, the power electronic device 22 as a motor bridge and a controller connected to the power electronic device by flat ribbon cable is provided.

The motor 40 is provided distally adjacent to and contacting the power electronic device 22 and has a torque constant in the range of from 2 to 10 mNm/A and a phase to phase resistance in the range of from 0.05 $\Omega$ to 3.0 $\Omega$.

The handpiece further comprises a reduction gear 50 provided distally adjacent to the motor 40, which has a reduction gear ratio of at most 12 :1.

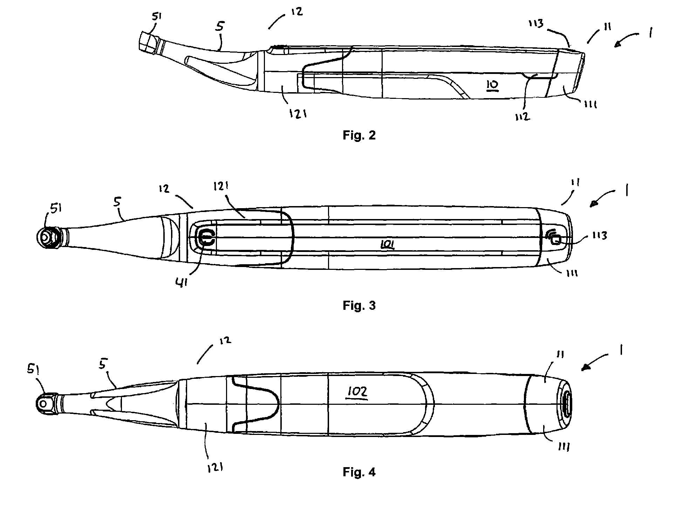

Figure 2 shows a side view of an specific exemplary embodiment of a cordless endodontic handpiece 1 according to the present invention. The cordless endodontic handpiece 1 comprises an elongated housing 10 attached at the distal end to a contra angle adapter 5. The contra angle head 51 is adapted for receiving a dental instrument, such as a endodontic file (not shown). The housing comprises windows 112 for providing visibility of LEDs indicating the status of the handpiece at the proximal end. The status may relate to the operation mode, e.g. rotating or reciprocating mode. Moreover, the battery charge status may be indicated as well as the pairing of the handpiece with an external Bluetooth device.

Figure 3 shows a top view of the embodiment of the cordless endodontic handpiece 1 according to the invention. An actuator switch 113 may also provided at the proximal end of the housing. The switch 113 may be used as a reset button, a c calibration switch or a switch initiatintig the connection of the handpiece with an external device, for example, via Bluetooth.

An actuator switch 41 is provided at the distal end of the housing. The switch may be a pressure sensor allowing the practitioner to switch the motor on or off so as to allow the practitioner to interfere with the operation of the file during the endodontic procedure.

Figure 4 shows a bottom view of the cordless endodontic handpiece 1 according to the invention. The housing 10 is a modular housing comprising a lower shell 2, an upper shell (not shown), an end cap 111 and a sleeve 121, which are releasably or permanently assembled to housing 10.

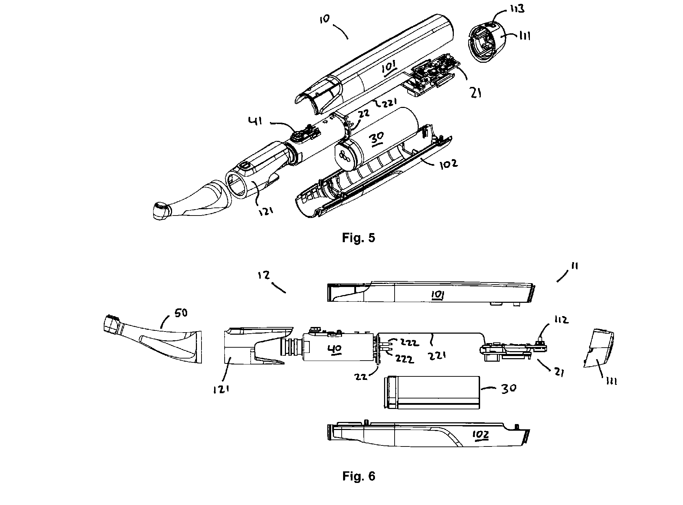

Figure 5 is a perspective exploded view of the cordless endodontic handpiece 1 of the present invention. As shown, the housing provides a chamber for receiving the motor 40, which is attached to the power electronic device 22. The power electronic device is connected to the controller 21 by a ribbon cable 221. Furthermore, the housing receives rechargeable battery 30 and the controller 21. The components of the handpiece are form-fittingly received in the housing. In particular, the controller 21 is received in corresponding recesses in endcap 111. The controller is held in position in the housing so that the LEDs are oriented towards the corresponding window of endcap 111. The housing is assembled by introducing the components between upper-end lower shell 101,102, and inserting the distal part of upper-end lower shell 101,102 into the sleeve 121, the correct positioning is provided by guiding surfaces on a recessed portion on upper shell 101 and lower shell 102, which are adapted to receive corresponding surfaces of sleeve 121. The endcap is subsequently placed on the proximal end of upper shell 101 and lower shell 102.

Fig. 6 shows a perspective exploded side view of an embodiment of a cordless endodontic handpiece 1 according to the present invention. As shown, a drive unit comprising the motor 40, the power electronic device 22 as a motor bridge, and a controller 21 connected to the power electronic device 22 by flat ribbon cable 221 is provided. The connection between the power electronic device 22 and the rechargeable battery 30 is provided by pogo-pins 222 so that a releasable connection of high conductivity may be established. Accordingly, the drive unit and the rechargeable battery 30 may be handled separately so that the exchange of the rechargeable battery is facilitated.

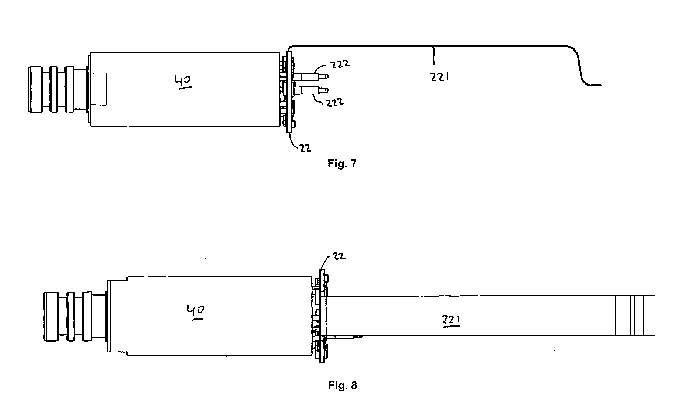

Fig. 7 shows a side view of an assembly of the motor 40 and a power electronic device 22 of a cordless endodontic handpiece according to the present invention. The power electronic device 22 is oriented so that the longitudinal axis of the motor 40 is normal to the plane of the electronic device 22. Preferably, the longitudinal axis of the motor is parallel to the longitudinal axis A-A' of the housing 10 (Fig. 1). The power electronic device 22 is connected to a flat ribbon cable 221 for establishing connectivity with a controller (not shown). The power electronic device 22 comprises two pogo-pins projecting proximally for establishing connectivity with a rechargeable battery (not shown). The power electronic device 22 comprises permanent connection with the motor by means of conductors having low conductivity. The conductors are preferably rigid rods of short length and large diameter, which are made of copper or an allow thereof.

Fig. 8 shows a top view of an assembly of the motor 40, and a power electronic device of an embodiment of a cordless endodontic handpiece according to the present invention.

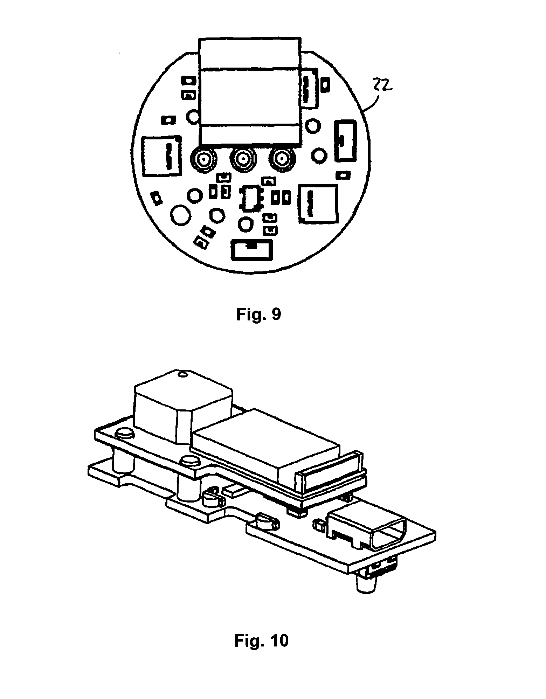

Fig. 9 shows a side view along the longitudinal axis A-A' of the housing of a power electronic device for use in a cordless endodontic handpiece 1 according to the present invention. As shown, the board of the power electronic device 22 preferably has an outer contour which is essentially circular for allowing the power electronic device 22 to be form-fittingly received in the circular cross-section of the housing 10.

Fig. 10 shows a perspective side view of a controller of an embodiment of a cordless endodontic handpiece according to the present invention.

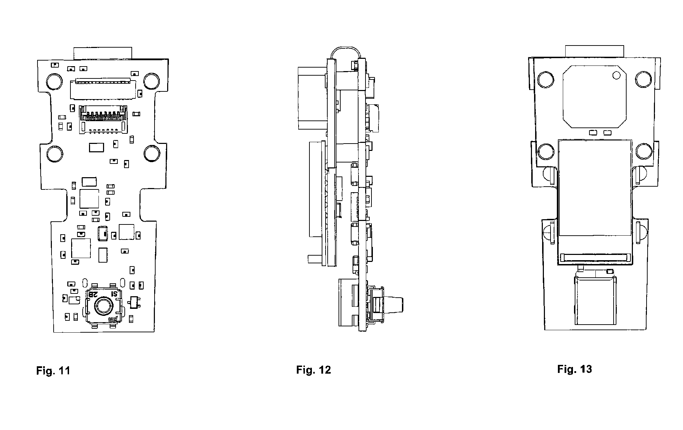

Fig. 11 shows a top view of a controller of an embodiment of a cordless endodontic handpiece according to the present invention.

Fig. 12 shows side view of a controller of an embodiment of a cordless endodontic handpiece according to the present invention.

Fig. 13 shows a bottom view of a controller of an embodiment of a cordless endodontic handpiece according to the present invention.

## Claims

1. Cordless endodontic handpiece (1) with a rotary and reciprocating operating mode for driving an endodontic instrument in an endodontic treatment, comprising:

   (a) an elongated housing (10) having a proximal end (11) and a distal end (12);
   the housing containing

   (a1) a controller (21);
   (a2) a rechargeable battery (30) provided distally adjacent to the controller (21);
   (a3) a power electronic device (22) provided distally adjacent to and contacting the rechargeable battery (30); and
   (a4) a motor (40) provided distally adjacent to and contacting the power electronic device (22);
the handpiece further comprising

(b) a reduction gear (50) provided distally adjacent to the motor (40); wherein

- the reduction gear (50) has a reduction gear ratio of at most 12 :1,
- the motor has a torque constant in the range of from 2 to 10 mNm/A; and
- the motor has a phase to phase resistance in the range of from 0.05 $\Omega$ to 3.0 $\Omega$.

2. The cordless endodontic handpiece according to claim 1, wherein the controller (21) and the power electronic device (22) are combined on a flex-rigid circuit board (20).

3. The cordless endodontic handpiece according to claim 1 or 2, wherein the power electronic device (22) is connected to the rechargeable battery (30) and the motor (40) by conductors having low electrical resistance.

4. The cordless endodontic handpiece according to any one of the preceding claims, wherein the power supplied to the motor is electronically controlled.

5. The cordless endodontic handpiece according to claim 1, wherein the power supplied to the motor is electronically controlled by pulse-width modulation.

6. The cordless endodontic handpiece according to any one of the preceding claims, wherein the rechargeable battery is a single Li-ion cell.

7. The cordless endodontic handpiece according to any one of the preceding claims, wherein the motor is driven by a voltage of at most 5V.

8. The cordless endodontic handpiece according to any one of the preceding claims, wherein the power electronic device comprises semiconductor switches selected from MOSFETs or insulated-gate bipolar transistors (IGBTs).

9. The cordless endodontic handpiece according to any one of the claims 3 to 8, wherein the conductors having low electrical resistance include one or more Pogo®-pins.

10. The cordless endodontic handpiece according to any one of the claims 3 to 9, wherein the conductors having low electrical resistance are made of Cu or an alloy thereof.

11. The cordless endodontic handpiece according to any one of the preceding claims, wherein the distance between the rechargeable battery and the motor is in the range of from 2 to 20 mm.

**Fig. 1**

Fig. 2

Fig. 3

Fig. 4

Fig. 5

Fig. 6

222
221
222
22

Fig. 7

22
40
221

Fig. 8

**Fig. 9**

**Fig. 10**

Fig. 11

Fig. 12

Fig. 13

Europäisches
Patentamt

European
Patent Office

Office européen
des brevets

# EUROPEAN SEARCH REPORT

Application Number

EP 15 15 7112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/301840 A1 (POLI DANIELE [IT]) 29 November 2012 (2012-11-29) * paragraph [0001] - paragraph [0064]; figures 1-2 * | 1-11 | INV. A61C1/06 A61C5/02 |
| X | EP 2 078 508 A1 (W & H DENTALWERK BUERMOOS GMBH) 15 July 2009 (2009-07-15) * paragraph [0011] - paragraph [0054]; figures 1, 2 * | 1-11 | |
| A | CN 203 506 897 U (DENJOY DENTAL CO LTD) 2 April 2014 (2014-04-02) * page 3 - page 4; figures 1-4 * | 1-11 | |
| A | US 2013/108978 A1 (YAMASHITA SEIICHIRO [JP] ET AL) 2 May 2013 (2013-05-02) * page 1 - page 9; figures 1-10 * | 1-11 | |
| A | US 2013/004913 A1 (DANGER KARL-HEINZ [DE]) 3 January 2013 (2013-01-03) * page 1 - page 4; figures 1-5 * | 1-11 | TECHNICAL FIELDS SEARCHED (IPC) A61C |

The present search report has been drawn up for all claims

| Place of search | Date of completion of the search | Examiner |
|---|---|---|
| Munich | 13 August 2015 | Wirth, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 15 7112

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2015

| Patent document cited in search report | | Publication date | Patent family member(s) | | Publication date |
|---|---|---|---|---|---|
| US 2012301840 | A1 | 29-11-2012 | EP 2506791 A2<br>JP 5189226 B2<br>JP 2013512719 A<br>US 2012301840 A1<br>WO 2011067723 A2 | | 10-10-2012<br>24-04-2013<br>18-04-2013<br>29-11-2012<br>09-06-2011 |
| EP 2078508 | A1 | 15-07-2009 | NONE | | |
| CN 203506897 | U | 02-04-2014 | NONE | | |
| US 2013108978 | A1 | 02-05-2013 | DE 102012020790 A1<br>JP 2013094433 A<br>US 2013108978 A1 | | 02-05-2013<br>20-05-2013<br>02-05-2013 |
| US 2013004913 | A1 | 03-01-2013 | DE 102011105958 A1<br>EP 2540249 A1<br>US 2013004913 A1 | | 03-01-2013<br>02-01-2013<br>03-01-2013 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6293795 B1